# EUROPEAN PATENT SPECIFICATION

(11) **EP 1 028 162 B1**
(45) Date of publication and mention of the grant of the patent: **28.09.2005**
(21) Application number: 00101579.1
(22) Date of filing: 27.01.2000
(51) Int. Cl.: C12G 1/02

(54) **Must container and fermentation apparatus**
Maischebehälter und Gärvorrichtung
Recipient pour moût et appareil de fermentation

(30) Priority: 05.02.1999 IT PN990018
(43) Date of publication of application: 16.08.2000
(73) Proprietor: Ifind S.r.l., 31030 Breda di Piave (TV) (IT)
(72) Inventor: Ervas, Giuseppe, 31020 Frescada di Preganziol (TV) (IT); Regazzo, Olindo, 31100 Treviso (IT)
(74) Representative: Dalla Rosa, Adriano

(56) References cited:
- EP-A- 0 737 740
- CH-A- 581 192
- US-A- 3 507 208
- US-A- 4 969 391

## Description

The invention refers to a must container and fermentation apparatus, which is adapted to contain considerable amounts of must and to extract the colouring substances from the dregs of pressed grapes without damaging or spoiling the products being treated.

Must fermentation apparatuses, suitable for red wine making, based on two communicating containers, where fermentation gas pushes fermentation liquid from one into another container, which is periodically emptied back into the first one, are known in the art. See for example: CH 581 192, US 4 969 391, US 3 507 208 or EP 0 737 740.

Must container and fermentation apparatuses with large volumetric must storage capacities are known in the art, in which the pressed liquid mixture is introduced in a chamber, while the dregs of pressed grapes are washed out with mechanical pressing means of various kinds, in order to extract therefrom the colouring substances for the must, which are then pumped towards the must fermentation chamber.

These apparatuses, however, are quite complex and cost-intensive in their construction owing to the presence of additional component parts, such as the mechanical pressing means and the pumps and associated hydraulic circuits that are particularly required to transfer the pressed liquid mixture and the washed-out dregs of pressed grapes towards the must chamber, which generally have a spoiling effect on the treated products and also require a continuous maintenance and attendance by proper personnel in view of ensuring a correct operation of the same.

The present invention has therefore the purpose of eliminating the above cited drawbacks by providing a must container and fermentation apparatus adapted to effectively stirring and washing out the grape husks, while mixing them continuously with the must under fermentation, in view of improving natural colouring of the same must. This must container and fermentation apparatus is provided with the construction characteristics that are substantially described with particular reference to the appended claims.

Features and advantages of the present invention will anyway be more readily understood from the description that is given below by way of non-limiting example with reference to the accompanying drawings, in which:

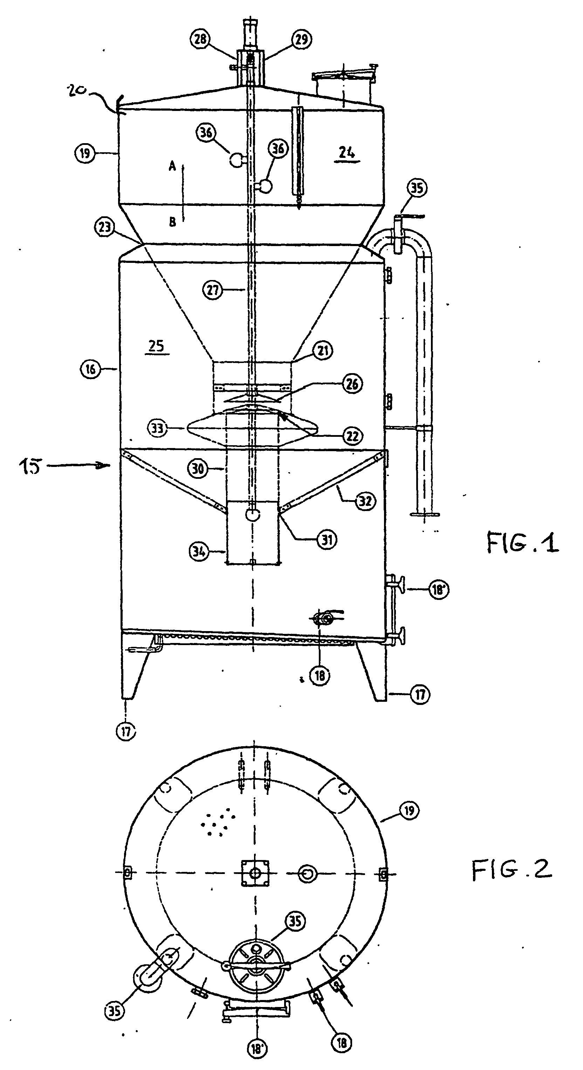

- Figure 1 is a schematical elevational view of the must container and fermentation apparatus according to the present invention;
- Figure 2 is a schematical top plan view of the apparatus of Figure 1;
- Figures 3 to 13 are schematical elevational views of the must container and fermentation apparatus according to the present invention, in a sequence of different operational phases thereof;
- Figure 14 is a schematical elevational view of the apparatus according to the present invention, in a varied operational phase thereof.

The above cited Figures can be noticed to schematically illustrate a must container and fermentation apparatus 15 according to the present invention, comprising substantially a cylindrical container 16 extending vertically, adapted to contain the pressed liquid mixture and having a large volumetric storage capacity, and further provided with lower legs 17 for resting on the ground and at least a lower aperture 18 capable of being shut off by valve means to cater for the previously pressed liquid mixture being let thereinto at the beginning of the cycle, said aperture being used to also let off the must at the end of the cycle, whereas the dregs of pressed grapes are discharged through an appropriate opening 18'. The apparatus according to the present invention also comprises a further container 19 in the shape of a frustum of a cone, which has an enlarged upper end portion 20 and becomes gradually smaller towards its lower end portion 21, which is substantially cylindrical in its cross-sectional shape and terminates with an open mouth 22 provided with sealing gasket, wherein said container is mounted on top of the cylindrical container 16 and is inserted tightly in the corresponding open end portion 23 of the latter, so as to partially penetrate the same.

Both containers 19 and 16 delimit, respectively, an upper chamber 24, which is adapted to contain only the must, and a lower chamber 25 which is separated from the former one and is adapted to contain both the must and the dregs of pressed grapes, and these chambers can be caused to either communicate or not communicate with each other by means of at least a moving valve member 26, which is capable of being displaced vertically upwards into an opening position by the hydrostatic pushing action of the must contained in the lower chamber 25 of the container 16, thereby enabling the must to flow from this lower chamber over to the upper chamber 24 of the apparatus according to the present invention, and downwards into a closing position owing to the pressure exerted by the must contained in the upper chamber 24, thereby preventing the must from flowing from this chamber over to the lower chamber 25, and these displacements of said valve member 26 are determined by the fact that the same is freely slidable along an elongated guide rod 27 extending vertically, passing centrally through said further container 19 and said mouth 22 and partially penetrating the container 16, said rod being supported by a support structure 28 fixed on top of said further container 19, and being actuated by a pneumatic piston 29, or the like, which is also supported by said support structure 28, so as to reciprocatingly and vertically slide in either one of the two mutually opposed directions A and B, said rod being further joined to an elongated and vertical tubular structure 30 which is provided therebelow and is housed slidably within vertical guides 31 of a further support structure 32 attached to the bottom of the container 16.

This tubular structure 30 is provided on top with an enlarged head portion 33, which is shaped so as to conformably fit against the open lower mouth 22 of the lower container end portion 21, and on the bottom with a filtering member 34 for filtering the must and separating it from the dregs or grape husks, said tubular structure being capable of being lifted and lowered by the rod 27, actuated by the piston 29, into different positions, and in particular from a completely raised position, in which the head portion 33 is displaced against the lower mouth 22, thereby preventing the must from flowing from one to the other of said upper chamber 24 and lower chamber 25, into different intermediate lowered positions, down to a final, completely lowered position in which the head portion 33 is moved away from the mouth 22 downwards, thereby enabling the must to flow from one over to the other one of said chambers 24 and 25 to an extent or in an amount that is proportional to the distance existing between said head portion 33 and the mouth 22, respectively, and therefore to the cross-section area of the thereby defined outflow port.

The apparatus according to the present invention also comprises at least a further valve member 35 of a fixed type, which is connected to the upper thinner portion of the lower chamber 25 and communicates with the outside ambient, said valve member being actuated into either opening or closing by means of appropriate actuation mechanisms of the apparatus (not shown) so as to enable or prevent, respectively, the venting of the air or the carbon gas that may develop during fermentation and are contained in said lower chamber, while keeping the same chamber under pressure in the latter case.

Finally, the apparatus being considered here also includes a mechanism for cleaning the lower chamber 25 and the upper chamber 24 at the end of the operational phases that will be described further on, said cleaning mechanism being comprised of a series of spray tubes 36 (shown schematically in Figure 13) connected to a water supply line and actuated by such actuation mechanisms so as to spray water under pressure against the inner walls of the above cited chambers, thereby determining the cleaning of the same walls.

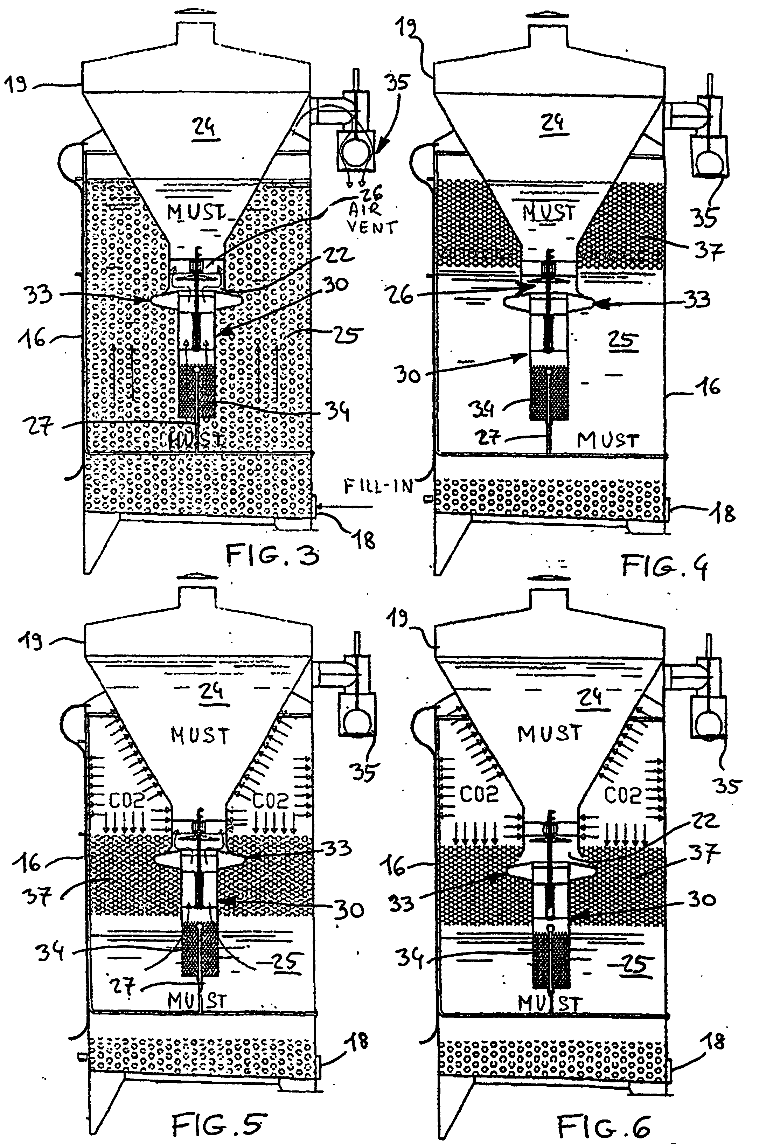

The various operation phases of the apparatus according to the present invention are now described below, by having particular reference to Figures 3 to 13.

Figure 3 is shown to illustrate the apparatus in the initial phase of its operation, in which both the upper chamber 24 and the lower chamber 25 are empty, while the fixed valve member 35 is displaced into opening, thereby enabling the lower chamber 25 to communicate with the outside ambient.

In this operational phase of the apparatus, then, the rod 27 is actuated so as to cause the tubular structure 30 to be displaced into its fully raised position, in which the head portion 33 is pushed against the lower mouth 22, so as to prevent the must and the dregs, or grape husks, from flowing through these parts, and the inlet opening 18 of the container 16 is opened, so that the pressed liquid mixture can be filled therethrough to gradually fill up the lower chamber 25 and, at the same time, causing the air contained in the same chamber to be expelled outside through said fixed valve member 35.

In this way, the pressed liquid mixture so filled into the chamber 25 rises gradually in its level until the highest pre-determined level is eventually reached, in the condition in which as soon as it reaches up to the filtering member 34, the latter starts to retain the dregs of pressed grapes, which in this way are separated and retained in the chamber 25, while the must is allowed to flow through and, by exerting a pushing action against the valve member 26 owing to its pressure, it causes the latter to open and is therefore allowed to further flow into the upper chamber 24, thereby filling it up gradually.

In this way, while the upper chamber 24 fills up with must only, the lower chamber 25 fills up with both must and dregs of pressed grapes, and the dregs themselves pile up gradually upwards to form a layered mass 37, and such a filling up is carried out until a maximum pre-determined level is eventually reached, as determined by appropriate level sensors (not indicated) controlled by the control and actuation mechanisms of the apparatus, in the conditions in which the must fills up both chambers 24 and 25 until the internal levels of the same chambers are allowed to reach an equilibrium owing to the principle of communicating vessels, and in which the filling of pressed liquid mixture into the apparatus is therefore interrupted and the inlet opening 18 is then closed.

In the next following operational phase of the apparatus illustrated in Figure 4, in which the dregs of pressed grapes have been gathering prevailingly in the layered zone 37, the fixed valve member 35 is actuated into closing, thereby preventing the air and carbon gas, which in the meanwhile starts to develop, from escaping outside from said lower chamber 25 in which they are contained, thereby maintaining said lower chamber 25 in a pressurized state, in a condition in which the pressed liquid mixture starts to ferment and develop carbon dioxide to an increasing extent.

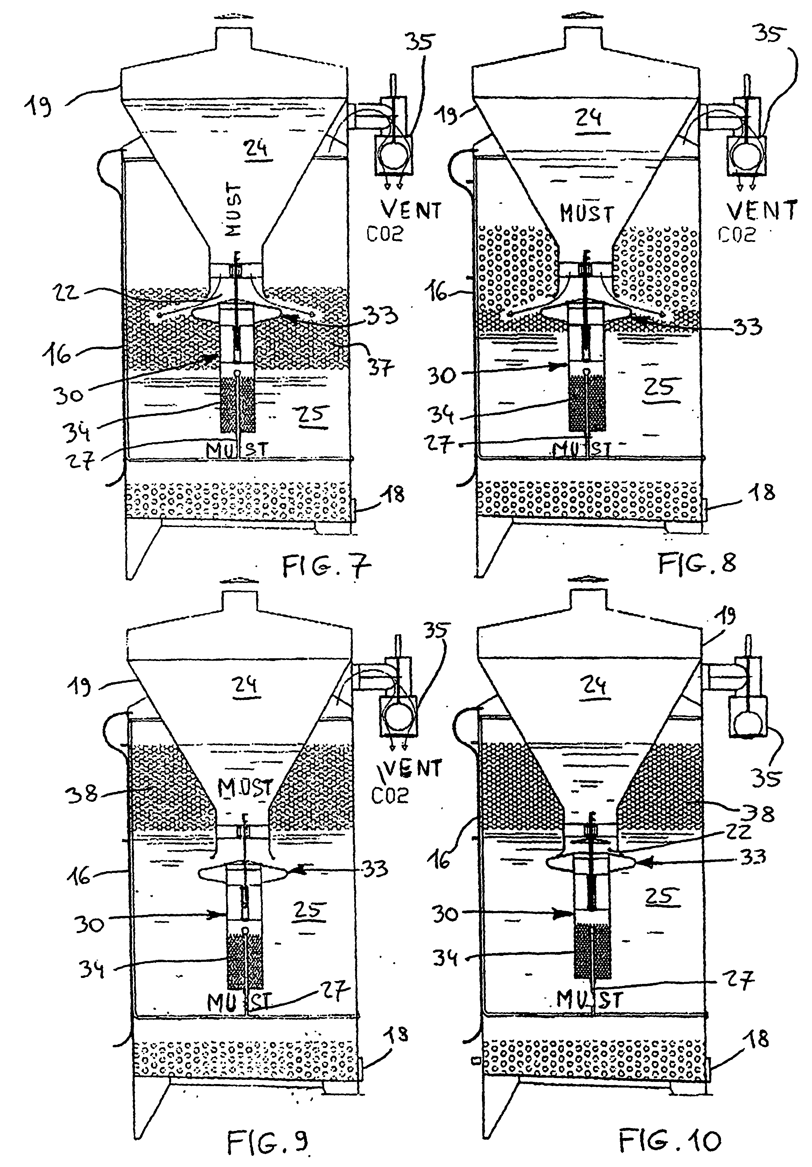

In the next following operational phase illustrated in Figure 5, it can be noticed that the gas, which progressively develops from the fermentation of the pressed liquid mixture and collects in the upper part of the chamber 25 above the level of the pressed liquid mixture itself, undergoes a gradual rise in its pressure and, by expanding, compresses the layered mass of dregs of pressed grapes 37 and the must downwards. As a result, the must itself is pressed through the filtering member 34 into the chamber 24 thereabove, entering the same chamber and rising in its level there, while this passage of must into said upper chamber 24 takes place until a minimum pre-determined level is reached down in the lower chamber 25, when the related sensor provides for the rod 27 to be actuated in its lowered position, in the next following operational phase illustrated in Figure 6, so that also the head portion 33 moves downwards and is no longer tightly pressed against the lower mouth 22, thereby enabling both chambers 24 and 25 to comunicate with each other, without however enabling the must to flow from the upper chamber 24 over into the lower chamber 25 owing to the pressure equilibrium existing in both such chambers. At the same time, in the next following operational phase illustrated in Figure 7, the fixed valve member 35 is actuated into opening, thereby enabling the upper part of the lower chamber 25 to communicate with the outside ambient, thereby modifying the pressure equilibrium existing in said chambers 24 and 25, since the air and the carbon gas contained in said upper part are progressively vented outside, through said valve member, under the hydrostatic pushing action of the must contained in the upper chamber 24 which compresses the must-dregs mixture and, by falling downwards by gravity effect through the free space existing between the mouth 22 and the head portion 33, it passes through the layered mass of dregs of pressed grapes 37, thereby breaking it up almost instantly and enabling them to be washed out in an optimum way, which thing promotes the natural transfer of the colouring and extractive substances. Under these circumstances, the pressure of the must causes the valve member 26 to close, thereby preventing an outflow through the tubular structure 30 and ensuring that such an outflow takes place solely between the mouth 22 and the head portion 33.

Then, in the next following operational phase illustrated in Figures 8 and 9, while the must continues to fall, the mass of dregs keeps being broken up and the dregs themselves are caused to again disperse in the must and tend to rise towards the upper part of the lower chamber 25, where they gather to form again a layered mass 38, and the must itself keeps falling until a new condition of equilibrium in the pressures prevailing in both upper and lower chambers is reached. At this point, in the next following operational phase illustrated in Figure 10, the rod 27 is actuated to displace upwards until the head portion 33 is again pressed against the lower mouth 22, as in the afore described condition, while the fixed valve member 35 is in turn actuated to move again in its closed position, thereby interrupting the communication between the interior of the chambers and the outside ambient and pressurizing the lower chamber 25.

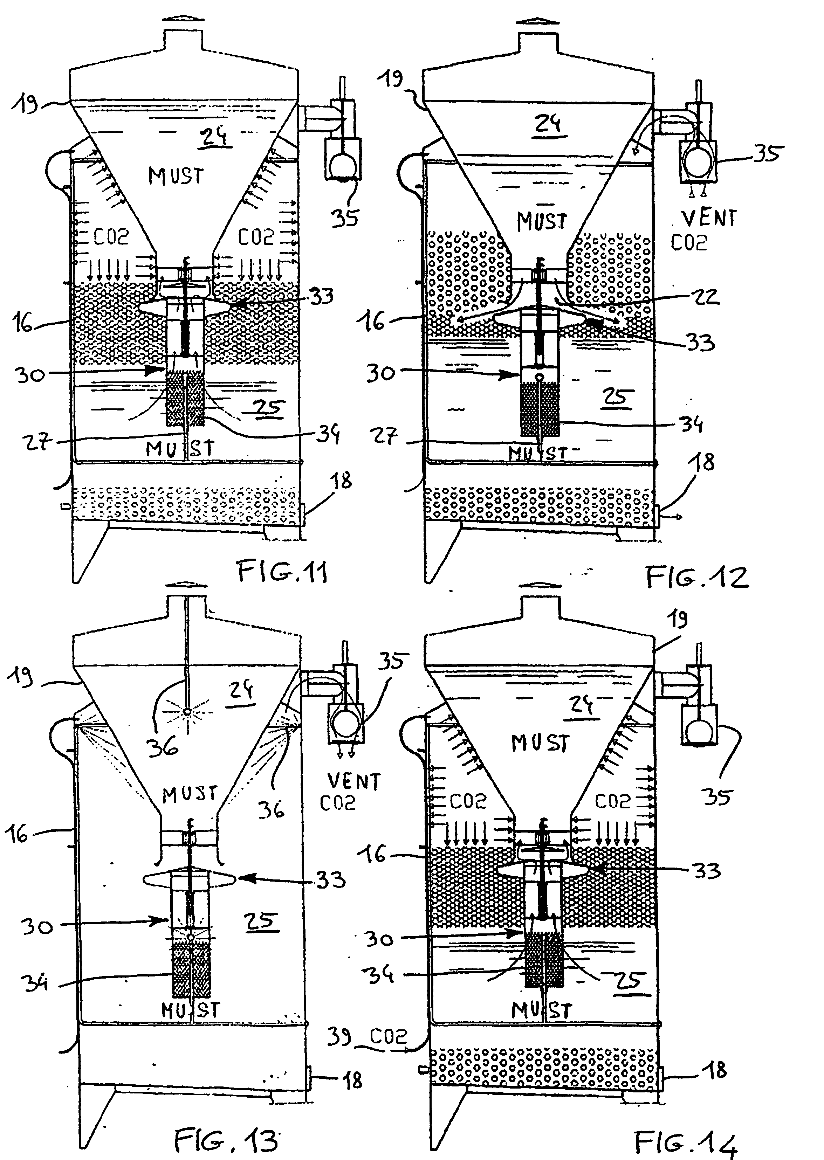

In this manner, in the next following opereational phase illustrated in Figure 11, the fermentation of the must is allowed to start again, along with the development of carbon gas which collects, as in the afore considered situation, in the upper part of the chamber 25, and this occurs by constantly keeping the dregs, ie. the pressed grape husks, immersed in the must, thereby preventing them from being in contact with the air and, as a result, oxidizing.

These phases of fermentation and breaking-up of the dregs of pressed grapes are repeated many times in the same manner, until a satisfactory colouring of the must and an adequate fermentation thereof are obtained. Subsequently, in the next following operational phase illustrated in Figure 12, the rod 27 is again actuated to displace into a lowered position, thereby moving the head portion 33 away from the mouth 22, while the fixed valve member 35 is actuated into opening. At the same time, also the outlet opening 18 is opened, thereby determining the outflow of the must and the dregs contained in the chambers 24 and 25, without any possibility for the dregs themselves to re-ascend in the upper chamber 24 by also passing through the filtering member 34, which is therefore prevented from clogging, since they are prevented from doing that by the must falling from the upper chamber down into the lower chamber. Such an outflow goes on until both chambers 24 and 25 are totally emptied, thereby bringing the cycle to an end and putting the apparatus in the condition in which it is ready to start a new operational cycle in the same manner and through the same phases as described above.

Finally, as illustrated in Figure 13, a final phase is carried out aimed at cleaning both the lower chamber 25 and the upper chamber 24 by letting in water under pressure through the spray tubes 36, and spraying this water against the inner walls of said chambers, until they are fully cleaned.

Figure 14 can be noticed to illustrate a varied operational phase of the above described cycle, in which, as the must is being processed and carbon gas is developed, such a phase can be considerably shortened by for instance insufflating gas directly into the apparatus according to the invention through a line 29 connected to a separate gas supply and leading to the lower chamber 25 of the apparatus itself.

In this way, the apparatus according to the present invention enables the dregs of pressed grapes to be effectively washed out so as to improve the colouring of the must, while avoiding a spoilage of the treated products and without any need for additional component parts to be used in view of determining such a breaking-up of the dregs mechanically, so that the same apparatus turns actually out to be more simple from a construction point of view, reliable and less expensive, ie. more attractive economically.

Finally, it should further be duly noticed that the described apparatus can equally operate even if the elongated rod 27 for the actuation of the tubular structure 30 is eliminated, in that the same tubular structure 30 may in fact be left free to slide vertically along proper guides into the various raised and lowered positions, by simply taking advantage to that purpose of the hydrostatic pushing action of the must and the dregs of pressed grapes contained in the lower chamber 25, as well as the pressure of the must contained in the upper chamber 24, as in the afore described situations, thanks to the tubular structure 30 behaving as a float, this anyway enabling the same results and advantages to be reached, without departing from the scope of the present invention.

## Claims

1. Must container and fermentation apparatus, adapted to contain the must and the dregs of pressed grapes that are then washed out in order to improve the natural colouring of the must, **characterized by** at least a first container (16) for the must and the dregs of pressed grapes, which is filled with pressed liquid mixture through at least an inlet and outlet opening (18) and communicates with the outside ambient through valve means (35), and a second container (19) for the must, which is arranged above said first container (16) and communicates with it through actuation means (26, 30), said actuation means (26, 30) being adapted to enable the must to pass from said first container (16) into said second container (19) during the fermentation of the must, and from said second container (19) into said first container (16) during the washing out of the dregs of pressed grapes, as well as to prevent the dregs of pressed grapes from passing from said first container (16) into said second container (19), and said valve means (35) being actuatable into closing or opening to prevent said first container (16) from communicating with the outside, or enable said first container (16) to communicate with the outside, during the fermentation of the must and the washing-out of the dregs of pressed grapes, respectively, and said inlet and outlet opening (18) being opened and closed to enable the pressed liquid mixture to be filled in at the beginning of the cycle and the must to be discharged at the end of the cycle, respectively.

2. Apparatus according to claim 1, **characterized in that** said first container (16) has a cylindrical, vertically extending shape, with a large volumetric storage capacity, and said second container (19) is in the shape of a downward tapering frustum of cone, terminates with an open lower mouth (22) and is mounted on said first container (16) and inserted in the latter in a tight fitting manner so as to partially penetrate it, said first and said second container (16, 19) delimiting at least a respective inner chamber (25, 24).

3. Apparatus according to claim 2, **characterized in that** said actuation means comprise moving valve means (26) controlling the flow of the must between said first and said second container (16, 19) and moving into opening or closing by freely sliding along vertically sliding support means (rod 27), which are supported within said inner chambers (25, 24) and are actuated to displace into various positions by actuator means (29), and further comprise a tubular structure (30) attached to said rod (27) in a position below said lower mouth (22) and provided with an enlarged head portion (33), co-operating with said mouth, and lower filtering means (34) enabling the must to pass through and preventing the dregs of pressed grapes from passing therethrough, said tubular structure (30) being actuatable by said rod (27) from a completely raised position, in which said enlarged head portion (33) fits against said mouth (22), thereby preventing the must and the dregs of pressed grapes from passing through in this point during the fermentation of the must, in the condition in which the passage of the must from one to the other one of said inner chambers (25, 24) occurs only and solely through said filtering means (34) and said moving valve means (26), to various intermediate lowered positions down to a final fully lowered position, in which said enlarged head portion (33) is moved downward away from said mouth (22), during washing out of the dregs of pressed grapes, in the condition in which the passage of the must from one to the other one of said chambers (24, 25) occurs through both said mouth (22) and said moving valve means (26) and said filtering means (34).

4. Apparatus according to claim 3, **characterized in that** it comprisess sensor means adapted to determine maximum and minimum filling levels of the pressed liquid mixture within said inner chambers (25, 24).

5. Apparatus according to claim 4, **characterized by** cleaning means (spray tubes 36) adapted to clean the interior of said first and said second container (16, 19).

6. Apparatus according to any of the preceding claims, **characterized by** gas supply means (39) communicating with said first container (16) and adapted to insufflate gas into the same container so as to shorten the duration of the process phase.

## Patentansprüche

1. Maischebehälter und Fermentierungsvorrichtung, geeignet, eine Maische und die Trübe/Trester gepresster Trauben zu enthalten, welche dann ausgewaschen wird, um die natürliche Färbung der Maische zu verbessern, **gekennzeichnet durch** mindestens einen ersten Behälter (16) für die Maische und die Trübe/Trester gepresster Trauben, welcher mit der ausgepressten Flüssigkeitsmischung **durch** mindestens eine Einlass- und Auslassöffnung (18) gefüllt wird und mit der äußeren Umgebung **durch** Ventileinrichtungen (35) in Verbindung steht, und einen zweiten Behälter (19) für die Maische, welcher oberhalb des ersten Behälters (16) angeordnet ist und mit diesem **durch** Betätigungsmittel (26, 30) in Verbindung steht, wobei die Betätigungsmittel (26, 30) geeignet sind, die Maische von dem ersten Behälter (16) in den zweiten Behälter (19) während der Fermentierung der Maische und von dem zweiten Behälter (19) in den ersten Behälter (16) während des Auswaschens der Trübe/Trester der gepressten Trauben gelangen zu lassen und ferner geeignet ist, zu verhindern, dass die Trübe/Trester gepresster Trauben von dem ersten Behälter (16) in den zweiten Behälter (19) gelangt, und dass die Ventileinrichtungen (35) zum Schließen oder Öffnen betätigbar sind, um zu verhindern, dass der erste Behälter (16) mit der Außenseite in Berührung steht oder, um es zu ermöglichen, dass der erste Behälter (16) mit der Außenseite in Berührung steht und dies während der Fermentierung der Maische bzw. des Auswaschens der Trübe/Trester gepresster Trauben, und dass die Einlass- und Auslassöffnung (18) geöffnet und geschlossen werden, damit die ausgepresste Flüssigkeitsmischung am Beginn des Zyklus' eingefüllt werden kann bzw. die Maische am Ende des Zyklus' ausgestoßen werden kann.

2. Vorrichtung nach Anspruch 1, **dadurch gekennzeichnet, dass** der erste Behälter (16) eine zylindrische, sich vertikal erstreckende Form mit großer volumetrischer Speicherkapazität aufweist, und dass der zweite Behälter in Form eines sich nach unten verjüngenden Kegelstumpfes ausgebildet ist und in einer unteren offenen Mündung (22) endet und auf den ersten Behälter (16) montiert und in einer dicht passenden Weise in letzteren eingeführt ist, um diesen teilweise zu durchdringen, wobei der erste und der zweite Behälter (16, 19) mindestens eine entsprechende innere Kammer (25, 24) begrenzen.

3. Vorrichtung nach Anspruch 2, **dadurch gekennzeichnet, dass** die Betätigungsmittel eine bewegliche Ventileinrichtung (26) zum Steuern der Strömung der Maische zwischen dem ersten und dem zweiten Behälter (16, 19) und zum Bewegen in die geöffnete oder geschlossene Stellung durch freies Gleiten in vertikaler Richtung längs vertikaler Lagereinrichtungen (Stange 27) aufweisen, welche innerhalb der inneren Kammern (25, 24) gelagert sind und betätigt werden, um in die verschiedenen Positionen durch Betätigungsmittel (29) verschoben zu werden und ferner eine rohrförmige Struktur (30) umfassen, die an der Stange (27) in einer Position unterhalb der unteren Mündung (22) befestigt ist und mit einem vergrößerten Kopfabschnitt (33) versehen ist, welcher mit der Mündung zusammenarbeitet, sowie untere Filtereinrichtungen (34), die es ermöglichen, dass die Maische hindurch gelangt und die Trübe/Trester gepresster Trauben daran gehindert wird, hindurchzugelangen, wobei die rohrförmige Struktur (30) durch die Stange (27) von einer vollständig angehobenen Position, in welche der vergrößerte Kopfabschnitt (33) gegen die Mündung (22) passt, um **dadurch** die Trübe/Trester und Maische gepresster Trauben daran zu hindern, während der Fermentierung der Maische durch diesen Punkt zu gelangen und zwar in dem Zustand, in welchem der Durchgang der Maische von der einen zur anderen der inneren Kammern (24, 25) lediglich und ausschließlich durch die Filtermittel (34) hindurch erfolgt, und die bewegliche Ventileinrichtung (26) in verschiedene zwischen liegende, abgesenkte Positionen nach unten zu einer vollständig abgesenkten Position zu bewegen, in welcher der vergrößerte Kopfabschnitt (33) von der Mündung (22) nach unten weg bewegt wird und dies während des Auswaschens der Trübe/Trester gepresster Trauben in dem Zustand, in welchem der Durchgang der Maische von der einen zur anderen der Kammer (24, 25) sowohl durch die Mündung (22) und die bewegliche Ventileinrichtung (26) als auch durch die Filtermittel (34) erfolgt.

4. Vorrichtung nach Anspruch 3, **dadurch gekennzeichnet, dass** sie Sensormittel umfasst, die geeignet sind, die maximalen und minimalen Füllstände der ausgepressten Flüssigkeitsmischung innerhalb der inneren Kammern (24, 25) festzustellen.

5. Vorrichtung nach Anspruch 4, **gekennzeichnet durch** Reinigungsmittel (Sprührohre 36), die geeignet sind, das Innere des ersten und des zweiten Behälters (16, 19) zu reinigen.

6. Vorrichtung nach einem der vorstehenden Ansprüche, **gekennzeichnet durch** Gaszufuhrmittel (39), die mit dem ersten Behälter (16) in Verbindung stehen und geeignet sind, Gas in diesen Behälter einzublasen, um **dadurch** die Dauer der Behandlungsphase zu verringern.

## Revendications

1. Récipient pour moût et appareil de fermentation, conçus pour contenir le moût et la lie de raisins pressés qui sont ensuite rincés pour améliorer la couleur naturelle du moût, **caractérisés par** au moins un premier récipient (16) pour le moût et la lie des raisins pressés, qui est rempli avec un mélange liquide pressé par l'intermédiaire d'au moins un orifice d'admission et d'évacuation (18), et communique avec l'air extérieur par l'intermédiaire d'un moyen de soupape (35), et un deuxième récipient (19) pour le moût, qui est agencé au-dessus dudit premier récipient (16) et communique avec celui-ci par l'intermédiaire de moyens d'actionnement (26, 30), lesdits moyens d'actionnement (26, 30) étant conçus pour permettre au moût de passer dudit premier récipient (16) audit deuxième récipient (19) au cours de la fermentation du moût, et dudit deuxième récipient (19) audit premier récipient (16) au cours du rinçage de la lie des raisins pressés, ainsi que pour empêcher la lie des raisins pressés de passer dudit premier récipient (16) audit deuxième récipient (19), et ledit moyen de soupape (35) pouvant être actionné pour s'ouvrir ou se fermer afin d'empêcher ledit premier récipient (16) de communiquer avec l'extérieur, ou de permettre audit premier récipient (16) de communiquer avec l'extérieur, au cours de la fermentation du moût et du rinçage de la lie des raisins pressés, respectivement, et ledit orifice d'admission et d'évacuation (18) étant ouvert et fermé pour permettre au mélange liquide pressé d'être versé au début du cycle et au moût d'être évacué à la fin du cycle, respectivement.

2. Appareil selon la revendication 1, **caractérisé en ce que** ledit premier récipient (16) a une forme cylindrique s'étendant verticalement, avec une grande capacité de stockage volumétrique, et ledit deuxième récipient (19) a la forme d'un tronc de cône convergent vers le bas, se termine par une embouchure inférieure ouverte (22) et est monté sur ledit premier récipient (16) et inséré dans ce dernier de manière à être bien ajusté afin de s'y introduire partiellement, lesdits premier et deuxième récipients (16, 19) délimitant au moins une chambre intérieure (25, 24) respective.

3. Appareil selon la revendication 2, **caractérisé en ce que** lesdits moyens d'actionnement comprennent le moyen de soupape mobile (26) commandant l'écoulement du moût entre lesdits premier et deuxième récipients (16, 19) et se déplaçant pour provoquer l'ouverture ou la fermeture en coulissant librement le long d'un moyen de support de coulissement vertical (tige 27), qui est maintenu à l'intérieur desdites chambres intérieures (25, 24) et est actionné pour se déplacer vers plusieurs positions par les moyens d'actionnement (29), et comprend en outre une structure tubulaire (30) fixée à ladite tige (27) dans une position inférieure à ladite embouchure inférieure (22) et munie d'une partie de tête agrandie (33), coopérant avec ladite embouchure, et le moyen de filtrage inférieur (34) permettant au moût de passer au travers et empêchant à la lie des raisins pressés de passer au travers, ladite structure tubulaire (30) pouvant être actionnée par ladite tige (27) à partir d'une position complètement dressée, dans laquelle la partie de tête agrandie (33) s'appuie contre ladite embouchure (22), empêchant ainsi le moût et la lie des raisins pressés de passer au travers à ce stade au cours de la fermentation du moût, dans la condition dans laquelle le passage du moût de l'une à l'autre desdites chambres intérieures (25, 24) a lieu uniquement par l'intermédiaire dudit moyen de filtrage (34) et ledit moyen de soupape mobile (26) vers plusieurs positions abaissées intermédiaires jusqu'à une position finale complètement abaissée, dans laquelle ladite partie de tête agrandie (33) est éloignée de ladite embouchure (22) en étant déplacée vers le bas, au cours du rinçage de la lie des raisins pressés, dans la condition dans laquelle le passage du moût de l'une à l'autre desdites chambres (24, 25) a lieu par l'intermédiaire de ladite embouchure (22) et dudit moyen de soupape mobile (26) et dudit moyen de filtrage (34).

4. Appareil selon la revendication 3, **caractérisé en ce qu'**il comprend un moyen de capteur conçu pour déterminer les niveaux de remplissage maximum et minimum du mélange liquide pressé à l'intérieur desdites chambres intérieurs (25, 24).

5. Appareil selon la revendication 4, **caractérisé par** des moyens de nettoyage (tubes de pulvérisation 36) conçus pour nettoyer l'intérieur desdits premier et deuxième récipients (16, 19).

6. Appareil selon l'une quelconque des revendications précédentes, **caractérisé par** un moyen d'alimentation en gaz (39) communiquant avec ledit premier récipient (16) et conçu pour insuffler du gaz dans le même récipient afin de réduire la durée de la phase de traitement.
